# EUROPEAN PATENT SPECIFICATION

(11) **EP 3 365 285 B1**
(45) Date of publication and mention of the grant of the patent: **04.03.2020**
(21) Application number: 16782223.8
(22) Date of filing: 17.10.2016
(51) Int. Cl.: C02F 3/10, C02F 3/34, C02F 3/00, C02F 101/30, C02F 101/00

(54) **SYSTEM AND METHOD FOR REMOVING MICROPOLLUTANTS FROM WASTEWATER**
SYSTEM UND VERFAHREN ZUR BESEITIGUNG VON MIKROSCHADSTOFFEN AUS ABWASSER
SYSTÈME ET MÉTHODE D'ÉLIMINATION DE MICROPOLLUANTS DES EAUX USÉES

(30) Priority: 22.10.2015 LU 92857
(43) Date of publication of application: 29.08.2018
(73) Proprietor: Luxembourg Institute of Science and Technology (LIST), 4362 Esch-sur-Alzette (LU)
(72) Inventor: CORNELISSEN, Alex, 5554 Remich (LU); KÖHLER, Christian, 54295 Trier (DE); VENDITTI, Silvia, 54295 Trier (DE)
(74) Representative: Lecomte & Partners
(86) International application number: PCT/EP2016/074881
(87) International publication number: WO 2017/067882

(56) References cited:
- WO-A1-2014/036732
- CN-Y- 200 967 775
- GB-A- 2 388 557
- JP-A- H07 986
- JP-A- 2008 188 529
- JP-A- 2013 116 456
- US-A- 4 105 549

## Description

### Technical field

The invention is directed towards a system and method which allows the removal of micropollutants from wastewater.

### Background art

One of the current state of the art technologies for removing micropollutants is a conventional activated carbon column or a conventional filter, often called Rapid Gravity Filter (RFG) with activated carbon or with a layer of activated carbon included into the system. These filters or columns are normally equipped with a backwash (treated water with an air-scour). The columns can be either operated in up-flow or down-flow mode while filters, with the exception of pressure filters, are operated in down-flow mode. A disadvantage of this kind of water treatment is the costs associated with replacing or regenerating the activated carbon particles.

Ozone treatment or UV treatment, with or without addition of other oxidising agents such as peroxide derivatives are also known in the art of treatment of water and wastewater. These treatments are often followed by sand filtration. A disadvantage of such wastewater treatment is the costs associated with generating the ozone or the UV light. Furthermore, the design of such system should be safely conceived, leading also to different costs which can be relatively high. The chemicals included in the system, must also be safely stored.

Prior art patent document published WO 2012/160526 A2 relates to microorganism-comprising particles and to the use of the same for the removal of contaminants from water or soil, for reducing nitrate overload in water, for purifying food industry wastewater or for purifying pharmaceutical wastewater. The bioreactor system of said prior art document comprises particles that may be cultured in a separate area, namely in divided internal chambers separated by a perforated separator of said bioreactor system. The particles are freeze-dried bacteria and are thus fed by nutrients useful for bacterial growth and prosperity. Freeze-dried bacteria are used for conferring long life span to the system. Although possibly efficient, such a system needs to be settled with the freeze-dried bacteria necessary for treating a type of wastewater. For example, this disclosure describes a list of specific bacteria to use in case of treatment of petroleum wastewater, of municipal wastewater, of food industry wastewater, of pharmaceutical wastewater and/or of denitrification of wastewater. The drawback of this disclosure is that the bioreactor system needs to be adapted adequately as a function of the wastewater to be treated.

Prior art patent document published CN 102557274 (A) describes a method for treating wastewater by microbial directional produced enzyme. A microorganism is thus trained to produce an enzyme useful for the removal of contaminant and is then added to the wastewater treatment aeration tank in a controlled dosage. The disadvantage of this method is that the enzyme is trained separately to the treatment system.

Prior art Japanese patent application published JP H07 986 A describes a raw water treatment apparatus that can reliably remove ammonia from the raw water.

### Summary of invention

### Technical Problem

The invention has as an objective to solve all the above mentioned drawbacks of the wastewater treatment system known in the art. In particular, the systems known in the art do not train the bacteria in the system as such which can generate difficulties regarding the storage and/or the transfer of those bacteria into the system as such. Furthermore, the systems in the art are not really practical because they demand preliminary studies of which type of bacteria should be used in order to digest all or most of the micropollutants comprised into the wastewater to be treated.

### Technical solution

The invention is defined by the appended set of claims. The first object of the invention is directed to a device adapted for wastewater treatment, said wastewater comprising at least one sort of micropollutant, said device comprising a column and a backwashing system in fluid connection with said column through an inlet. Said column comprises said inlet and an outlet, said inlet being upstream to said outlet. Said column further comprises a zone comprising bacteriologically activated carbon being downstream to said inlet and being divided in subzone A, subzone B and subzone C; subzone A being upstream to subzone B and subzone B being upstream to subzone C. Said column also comprises a backwashing space, said backwashing space being downstream to said zone comprising bacteriologically activated carbon. Said device is remarkable in that the bacteriologically activated carbon of subzone A comprises starving micro-organisms, the bacteriologically activated carbon of subzone B comprises micro-organisms fed through a first feeding system adapted to feed said micro-organisms with ethanol, sugar derivatives, and/or nutrients, the bacteriologically activated carbon of subzone C comprises micro-organisms fed through a second feeding system adapted to feed said micro-organisms with structural analogs of components comprised into said wastewater, and in that said backwashing system is configured to mix said subzones A, B and C together.

According to a preferred embodiment, said starving micro-organisms of subzone A are able to degrade said at least one sort of micropollutant and/or said micro-organisms fed through said first feeding system are able to degrade said at least one sort of micropollutant.

According to a preferred embodiment, said micro-organisms are bacteria.

According to a preferred embodiment, the length of subzone B is shorter than the length of subzone A and that the length of subzone C is larger than the length of subzone B.

According to a preferred embodiment, said column further comprises one safety zone being downstream to said backwashing space and upstream to said outlet and/or in that said column further comprises one packing system being downstream to said inlet and upstream to said zone comprising bacteriologically activated carbon.

The second object of the invention is directed to a method for wastewater treatment, said wastewater comprising at least one sort of micropollutant, said method comprising the step of passing said wastewater in a device, the step of feeding the micro-organisms with ethanol, sugar derivatives, preferentially molasses, and/or nutrients, preferentially Lysogeny broth, and the step of feeding the micro-organisms with structural analogs of components comprised into said wastewater, said method being characterized in that said device is in accordance with any the first object of the invention.

According to a preferred embodiment, said method further comprises the step of backwashing the column of said device, said step of backwashing being configured to mix said subzones A, B and C together.

According to a preferred embodiment, said method comprises the step of treating said wastewater in a membrane bioreactor and/or through an activated sludge process prior to said step of passing said wastewater in said device.

According to a preferred embodiment, said wastewater has, prior to said step of passing said wastewater in said device, a chemical oxygen demand comprised between 5 ppm and 50 ppm, preferentially comprised between 10 ppm and 20 ppm.

According to a preferred embodiment, said at least one sort of micropollutant is a xenobiotic, in particular diclofenac, carbamazepine, lidocaine, metoprolol, atenolol, sulfadimidine, derivatives thereof, and/or any combinations thereof.

According to a preferred embodiment, the concentration of said structural analogs of components comprised into said wastewater is comprised between 0% and 1000% of the concentration of the components comprised into said wastewater, preferentially between 50% and 300%.

### Advantages of the invention

The invention is particularly interesting in that the claimed device allows the continuous variation of the environment of the micro-organism which causes starvation, recovery and learning to the micro-organism. In the starvation mode (without external substrates), the micro-organisms are very efficient in degrading complex molecules, *i.e.* micropollutants comprised into the wastewater. In the recovery mode, the micro-organisms get enough food and/or nutrient for cell synthesis and in the learning mode, the micro-organisms adapt themselves to the micropollutants which are targeted. As all these three modes are achieved in a whole single system by the design of the device of the present invention, this provides efficacy and simplicity of wastewater treatment, leading furthermore to a cost reduction.

### Brief description of the drawings

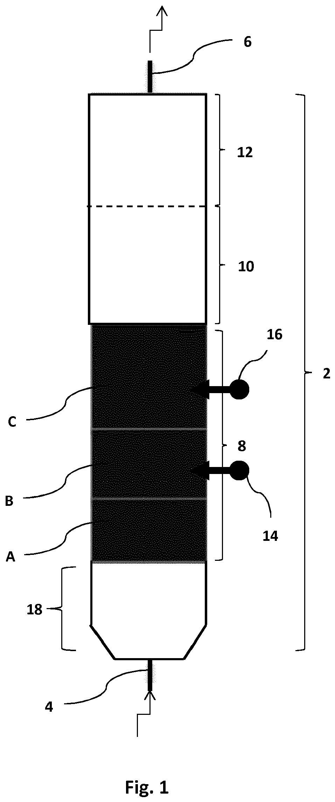

Figure 1: Schematic representation of the wastewater treatment system/device according to the present invention.

### Description of an embodiment

The wastewater comprises micropollutants that need to be removed in order to produce treated effluents. Those micropollutants are qualified in terms of COD (chemical oxygen demand) and may also contain various components, such as xenobiotics. Typical xenobiotics targeted by the system of the present invention are diclofenac, carbamazepine, lidocaine, metoprolol, atenolol, sulfadimidine, and/or derivatives thereof.

The wastewater with a COD of about 500 ppm, or of about 1000 ppm, is first treated in a conventional membrane bioreactor (MBR) and/or through a conventional activated sludge process (CAS). The resulting effluent ends up with a COD comprised between 5 ppm and 50 ppm, preferentially between 10 ppm and 20 ppm. Besides COD, the concentration of micropollutants is at the scale of the nanogram per litre.

The effluent is then treated in the system 2 of the present invention and that will be further detailed below.

The device of the present invention consists in a column 2 as depicted in figure 1.

The column 2 comprises an inlet 4 and an outlet 6 and is equipped with a backwashing system (not shown). The backwashing system is in fluid connection with the column 2 through the inlet 4. In the direction of the flow (the direction of the arrows on figure 1), three subzones are delimited. Subzone A, which is positioned in the upstream part of the column 2, followed by subzone B and subzone C. Those three subzones are therefore positioned in the upstream part of the column 2. The downstream part of the column 2 is used as a backwashing space 10 (when the backwash system is functioning) and a safety margin 12.

The safety zone 12, also called safety margin, is a zone in which all the components of the column 2 can stay safely within the column even when they are mixed up through the backwashing process. The safety margin is delimited by a dashed line on figure 1.

It is to be understood that the safety margin 12 is located downstream of the column 2 and may be more or less large, depending on the power of the backwashing system. It will therefore be apparent for the skilled in the art to determine the length of said safety zone in function of the backwashing system.

The column may be further equipped with a packing system 18, in accordance with the packing system known in the art.

The column is filled with bacteriologically activated carbon 8, which is then spread all over the three subzones, subsequently in the upstream part of the column 2.

When the backwash system is in functioning mode, in accordance with the normal means known by the skilled person in the art, the bacteriologically activated carbon 8 residing in the upstream part of the column is spread over the totality of the column 2, more particularly in the zone including the bacteriologically activated carbon 8 before backwashing and in the backwashing space 10. It is nevertheless that some of the particles would be thrown beyond the backwashing space 10, ending up therefore in the safety zone 12. During this backwashing process, all the particles of bacteriologically activated carbon 8 are mixed in a random fashion.

Therefore, it is apparent for the skilled person in the art that a particle of bacteriologically activated carbon 8 which was positioned in subzone A before the start of the backwashing process will have equal chances (relative to the size of the subzone) to end up in either subzone A, subzone B or subzone C after the end of the backwashing process. Similar conclusions have to be made for a particle located in subzone B before the start of the backwashing process, which will have equal chances to end up in one of the three zones after the end of said process, and for a particle located in subzone C before the start of the backwashing process, which will also have equal chance to end up randomly in one of the three subzones after the end of said process.

When the effluent with COD comprised between 10 ppm and 20 pmm is injected in the column 2 through the inlet 4, the effluent first reaches the subzone A. Then, a certain number of micro-organisms, in particular bacteria, start to degrade the micropollutants which are comprised in the MBR effluent. The micro-organisms are in fact adsorbed by the bacteriologically activated carbon 8.

Upon backwashing of the column, as the bacteriologically activated carbon 8 is spread all over the three subzones as explained above. Therefore, some of the bacteria also end up in the subzones B and C of the column.

In subzone B, the bacteria are fed, through the first feeding system 14 of the column 2, with food readily available for the bacteria, for example sugar derivatives, such as molasses, and/or ethanol, and/or nutrient, such as Lysogeny broth. This subzone is in fact the subzone where the bacteria on the bacteriologically activated carbon 8 will recover and grow.

In subzone C, the bacteria will be trained by being fed, through the second feeding system 16 of the column, with components almost similar to the micropollutants to be degraded. Those components almost similar to the micropollutants to be degraded are called structural analogs. Those structural analogs are tailored to govern bacteria activity towards the degradation of micropollutants. This will trigger a certain exo-enzyme profile which leads to an enhanced micropollutant removal. Upon backwashing, as some bacteria on the bacteriologically activated carbon 8 will end up in subzone A, the entering MBR effluent will be in close contact with a biofilm which is trained to digest the micropollutants contained in said effluent. For example, if the micropollutant in question is diclofenac, benzoic acid may be the component which is given to the bacteria located in subzone C of the column. The amount of structural analogs which is given to the micro-organisms is either zero (in this case, the bacteria are sufficiently efficient to work without any training) or ten times the amount of components comprised into the wastewater. The amount of structural analogs is preferably comprised between 50% and 300% of the concentration of the components comprised into the wastewater.

In order to improve the efficacy of the device of the present invention, the length of subzone B is shorter than the length of subzone A and the length of subzone C is larger than the length of subzone B. Indeed subzone B is the subzone where the micro-organisms grow by being fed with food which is readily degradable. In this subzone, the micro-organisms are less exposed to the micropollutants of the wastewater. Feeding on readily degradable substrates is subjected to high growth kinetics. Therefore, subzone B is shorter than subzone A, *i.e.* subzone B has less residence time. Similarly, in order to train the micro-organisms to purify the water by degrading the micropollutant, subzone C must be longer than subzone B since slowly degradable compounds are applied.

Once the wastewater has passed all through the column 2, the purified wastewater exits through the outlet 6.

The wastewater treatment system of the present invention allows the bacteria (i) to degrade the micropollutants comprised into the wastewater, (ii) to train and/or adapt (in subzone C) and (iii) to recover from starvation and grow (in subzone B). The column 2 of the present invention allows the variation of the environment of the micro-organisms which causes starvation (in subzone A, the bacteria have only the effluent with a COD comprised between 5 ppm and 30 ppm, preferentially between 10 ppm and 20 ppm to be fed), recovery and grow (in subzone B, the bacteria get sugar derivatives, nutrients and/or ethanol) and learning and/or adapting (in subzone C, the bacteria get trained by being fed with tailored substrates triggering exo-enzymes capable to cleave micropollutants comprised in the wastewater).

## Claims

1. Device adapted for wastewater treatment, said wastewater comprising at least one sort of micropollutant, said device comprising
a) a column (2), said column (2) comprising
i. an inlet (4) and an outlet (6), said inlet (4) being upstream to said outlet (6);
ii. a zone comprising bacteriologically activated carbon (8) being downstream to said inlet (4) and being divided in subzone A, subzone B and subzone C; subzone A being upstream to subzone B and subzone B being upstream to subzone C;
iii. a backwashing space (10), said backwashing space (10) being downstream to said zone comprising bacteriologically activated carbon (8);
b) a backwashing system in fluid connection with said column (2) through said inlet (4),
**characterized in that**
the bacteriologically activated carbon of subzone A comprises starving micro-organisms,
the bacteriologically activated carbon of subzone B comprises micro-organisms fed through a first feeding system (14) configured to feed said micro-organisms with ethanol, sugar derivatives and/or nutrients,
the bacteriologically activated carbon of subzone C comprises micro-organisms fed through a second feeding system (16) configured to feed said micro-organisms with structural analogs of said at least one sort of micropollutant, and **in that** said backwashing system is configured to mix said subzones A, B and C together.

2. Device according to claim 1, **characterized in that** said starving micro-organisms of subzone A are able to degrade said at least one sort of micropollutant and/or in that said micro-organisms fed through said first feeding system (14) are able to degrade said at least one sort of micropollutant.

3. Device according to any one of claims 1-2, **characterized in that** said micro-organisms are bacteria.

4. Device according to any one of claims 1-3, **characterized in that** the length of subzone B is shorter than the length of subzone A and that the length of subzone C is larger than the length of subzone B.

5. Device according to any one of claims 1-4, **characterized in that** said column (2) further comprises one safety zone (12) being downstream to said backwashing space (10) and upstream to said outlet (6) and/or **in that** said column further comprises one packing system (18) being downstream to said inlet (4) and upstream to said zone comprising bacteriologically activated carbon (8).

6. Method for wastewater treatment, said wastewater comprising at least one sort of micropollutant, said method comprising the step of passing said wastewater in a device, the step of feeding the micro-organisms with ethanol, sugar derivatives, preferentially molasses, and/or nutrients, preferentially Lysogeny broth, and the step of feeding the micro-organisms with structural analogs of components comprised into said wastewater, said method being **characterized in that** said device is in accordance with any one of claims 1-5.

7. Method for wastewater treatment according to claim 6, **characterized in that** said method further comprises the step of backwashing the column (2) of said device, said step of backwashing being configured to mix said subzones A, B and C together.

8. Method for wastewater treatment according to any one of claims 6-7, **characterized in that** said method comprises the step of treating said wastewater in a membrane bioreactor and/or through an activated sludge process prior to said step of passing said wastewater in said device.

9. Method for wastewater treatment according to any one of claims 6-8, **characterized in that** said wastewater has, prior to said step of passing said wastewater in said device, a chemical oxygen demand comprised between 5 ppm and 50 ppm, preferentially comprised between 10 ppm and 20 ppm.

10. Method for wastewater treatment according to any one of claims 6-9, **characterized in that** said at least one sort of micropollutant is a xenobiotic, in particular diclofenac, carbamazepine, lidocaine, metoprolol, atenolol, sulfadimidine, derivatives thereof, and/or any combinations thereof.

11. Method for wastewater treatment according to any one of claims 6-10, **characterized in that** the concentration of said structural analogs of components comprised into said wastewater is comprised between 0% and 1000% of the concentration of the components comprised into said wastewater, preferentially between 50% and 300%.

## Patentansprüche

1. Vorrichtung zur Abwasserbehandlung, wobei das Abwasser mindestens eine Art von Mikroverunreinigungen enthält und wobei die Vorrichtung Folgendes umfasst:
a) eine Säule (2), wobei die Säule (2) Folgendes umfasst:
i. einen Einlass (4) und einen Auslass (6), wobei der Einlass (4) stromaufwärts zum Auslass (6) liegt;
ii. einen Bereich, der bakteriologische Aktivkohle (8) enthält und sich stromabwärts des Einlasses (4) befindet und in Teilbereich A, Teilbereich B und Teilbereich C unterteilt ist, wobei sich Teilbereich A stromaufwärts der Teilbereich B und Teilbereich B stromaufwärts der Teilbereich C befindet;
iii. einen Rückspülraum (10), wobei der Rückspülraum (10) stromabwärts zum genannten Bereich liegt, der die bakteriologische Aktivkohle (8) enthält;
b) ein Rückspülsystem, das über den Einlass (4) mit einer Flüssigkeitsverbindung mit der Säule (2) verbunden ist,
**dadurch gekennzeichnet, dass**
die bakteriologische Aktivkohle des Teilbereichs A ausgehungerte Mikroorganismen enthält,
wobei die bakteriologische Aktivkohle des Teilbereichs B Mikroorganismen enthält, die durch ein erstes Zuführsystem (14) zugeführt werden, das dazu konfiguriert ist, die Mikroorganismen mit Ethanol, Zuckerderivaten und/oder Nährstoffen zu versorgen,
wobei die bakteriologische Aktivkohle des Teilbereichs C Mikroorganismen enthält, die durch ein zweites Zuführsystem (16) zugeführt werden, das dazu konfiguriert ist, die Mikroorganismen mit Strukturanaloga mindestens einer Art der genannten Mikroverunreinigungen zu füttern, und wobei das Rückspülsystem dazu konfiguriert ist, die Teilbereiche A, B und C miteinander zu vermischen.

2. Vorrichtung nach Anspruch 1, **dadurch gekennzeichnet, dass** die ausgehungerten Mikroorganismen des Teilbereichs A in der Lage sind, mindestens eine Art dieser Mikroverunreinigungen abzubauen und/oder die durch das erste Zuführsystem (14) zugeführten Mikroorganismen in der Lage sind, mindestens eine Art dieser Mikroverunreinigungen abzubauen.

3. Vorrichtung nach einem der Ansprüche 1-2, **dadurch gekennzeichnet, dass** die Mikroorganismen Bakterien sind.

4. Vorrichtung nach einem der Ansprüche 1-3, **dadurch gekennzeichnet, dass** die Länge des Teilbereichs B kleiner ist als die Länge des Teilbereichs A und die Länge des Teilbereichs C größer ist als die Länge des Teilbereichs B.

5. Vorrichtung nach einem der Ansprüche 1-4, **dadurch gekennzeichnet, dass** die Säule (2) ferner eine Sicherheitszone (12) umfasst, die stromabwärts des Rückspülraums (10) und stromaufwärts des Auslasses (6) angeordnet ist und/oder die Säule ferner ein Dichtungssystem (18) umfasst, das stromabwärts des Einlasses (4) und stromaufwärts des Bereichs angeordnet ist, der bakteriologische Aktivkohle (8) umfasst.

6. Verfahren zur Abwasserbehandlung, wobei das Abwasser mindestens eine Art von Mikroverunreinigungen enthält, wobei das Verfahren den Schritt des Durchleitens des Abwassers in einer Vorrichtung, den Schritt des Fütterns der Mikroorganismen mit Ethanol, Zuckerderivaten, vorzugsweise Melasse und/oder Nährstoffen, vorzugsweise Lysogenie-Brühe, und den Schritt des Zuführens der Mikroorganismen mit Strukturanaloga von Komponenten, die im Abwasser enthalten sind, umfasst, wobei das Verfahren **dadurch gekennzeichnet ist, dass** die Vorrichtung konform zu einem der Ansprüche 1-5 ist.

7. Verfahren zur Abwasserbehandlung nach Anspruch 6, **dadurch gekennzeichnet, dass** das Verfahren ferner den Schritt des Rückspülens der Säule (2) der Vorrichtung umfasst, wobei der Schritt des Rückspülens dazu ausgelegt ist, die Teilbereiche A, B und C miteinander zu vermischen.

8. Verfahren zur Abwasserbehandlung nach einem der Ansprüche 6-7, **dadurch gekennzeichnet, dass** dieses Verfahren den Schritt der Behandlung dieses Abwassers in einem Membranbioreaktor und/oder durch einen Belebtschlammprozess vor dem Schritt des Durchleitens des Abwassers in der Vorrichtung umfasst.

9. Verfahren zur Abwasserbehandlung nach einem der Ansprüche 6-8, **dadurch gekennzeichnet, dass** das Abwasser vor dem Schritt des Durchleitens des Abwassers in der Vorrichtung einen chemischen Sauerstoffbedarf zwischen 5 ppm und 50 ppm aufweist, vorzugsweise zwischen 10 ppm und 20 ppm.

10. Verfahren zur Abwasserbehandlung nach einem der Ansprüche 6-9, **dadurch gekennzeichnet, dass** mindestens eine Art dieser Mikroverunreinigungen ein Xenobiotikum ist, insbesondere Diclofenac, Carbamazepin, Lidocain, Metoprolol, Atenolol, Sulfadimidin, Derivate davon und/oder Kombinationen davon.

11. Verfahren zur Abwasserbehandlung nach einem der Ansprüche 6-10, **dadurch gekennzeichnet, dass** die Konzentration der Strukturanaloge von Komponenten, die im Abwasser enthalten sind, zwischen 0 % und 1000 % der Konzentration der im Abwasser enthaltenen Komponenten beträgt, wurden, vorzugsweise zwischen 50 % und 300 %.

## Revendications

1. Dispositif conçu pour un traitement des eaux usées, lesdites eaux usées comprenant au moins un type de micropolluant, ledit dispositif comprenant :
a) une colonne (2), ladite colonne (2) comprenant :
i. une entrée (4) et une sortie (6), ladite entrée (4) étant disposée en amont par rapport à ladite sortie (6) ;
ii. une zone comprenant du charbon (8) activé par voie bactériologique, qui est disposée en aval par rapport à ladite entrée (4) et qui est subdivisée en une zone secondaire A, en une zone secondaire B et en une zone secondaire C ; la zone secondaire A est disposée en amont par rapport à la zone secondaire B et la zone secondaire B est disposée en amont par rapport à la zone secondaire C ;
iii. un espace de lavage à contre-courant (10), ledit espace de lavage à contre-courant (10) étant disposé en aval par rapport à ladite zone comprenant du charbon (8) activé par voie bactériologique ;
b) un système de lavage à contre-courant mis en liaison par fluide avec ladite colonne (2) par l'intermédiaire de ladite entrée (4) ;
**caractérisé en ce que**
le charbon (8) activé par voie bactériologique de la zone secondaire A comprend des micro-organismes affamés ;
le charbon (8) activé par voie bactériologique de la zone secondaire B comprend des micro-organismes nourris par l'intermédiaire d'un premier système d'alimentation (14) qui est configuré pour alimenter lesdits micro-organismes avec de l'éthanol, des dérivés du sucre et/ou des nutriments ;
le charbon (8) activé par voie bactériologique de la zone secondaire C comprend des micro-organismes nourris par l'intermédiaire d'un deuxième système d'alimentation (16) qui est configuré pour alimenter lesdits micro-organismes avec des analogues structurels dudit au moins un type de micropolluant ; et
dans lequel ledit système de lavage à contre-courant est configuré pour mélanger lesdites zones secondaires A, B et C, les unes aux autres.

2. Dispositif selon la revendication 1, **caractérisé en ce que** lesdits micro-organismes affamés de la zone secondaire A sont capables de décomposer ledit au moins un type de micropolluant et/ou **en ce que** lesdits micro-organismes nourris par l'intermédiaire dudit premier système d'alimentation (14) sont capables de décomposer ledit au moins un type de micropolluant.

3. Dispositif selon l'une quelconque des revendications 1 à 2, **caractérisé en ce que** lesdits micro-organismes sont des bactéries.

4. Dispositif selon l'une quelconque des revendications 1 à 3, **caractérisé en ce que** la longueur de la zone secondaire B est inférieure à la longueur de la zone secondaire A et **en ce que** la longueur de la zone secondaire C est supérieure à la longueur de la zone secondaire B.

5. Dispositif selon l'une quelconque des revendications 1 à 4, **caractérisé en ce que** ladite colonne (2) comprend en outre une zone de sécurité (12) qui est disposée en aval par rapport audit espace de lavage à contre-courant (10) et en amont par rapport à ladite sortie (6) et/ou **en ce que** ladite colonne comprend en outre un système de remplissage (18) qui est disposé en aval par rapport à ladite entrée (4) et en amont par rapport à ladite zone comprenant du charbon (8) activé par voie bactériologique.

6. Procédé destiné à un traitement des eaux usées, lesdites eaux usées comprenant au moins un type de micropolluant, ledit procédé comprenant l'étape dans laquelle on fait passer lesdites eaux usées dans un dispositif, l'étape dans laquelle on alimente les micro-organismes avec de l'éthanol, des dérivés du sucre, de préférence des mélasses, et/ou des nutriments, à titre préférentiel avec un bouillon lysogène, et l'étape dans laquelle on alimente les micro-organismes avec des analogues structurels de composants compris dans lesdites eaux usées, ledit procédé étant **caractérisé en ce que** ledit dispositif est conforme à l'une quelconque des revendications 1 à 5.

7. Procédé destiné à un traitement des eaux usées selon la revendication 6, **caractérisé en ce que** ledit procédé comprend en outre l'étape dans laquelle on soumet à un lavage à contre-courant la colonne (2) dudit dispositif, ladite étape de lavage à contre-courant étant configurée pour un mélange desdites zones secondaires A, B et C les unes avec les autres.

8. Procédé destiné à un traitement des eaux usées selon l'une quelconque des revendications 6 à 7, **caractérisé en ce que** ledit procédé comprend en outre l'étape dans laquelle on traite lesdites eaux usées dans un bioréacteur à membrane et/ou par l'intermédiaire d'un processus faisant appel à des boues activées avant ladite étape dans laquelle on fait passer lesdites eaux usées dans ledit dispositif.

9. Procédé destiné à un traitement des eaux usées selon l'une quelconque des revendications 6 à 8, **caractérisé en ce que** lesdites eaux usées possèdent, avant ladite étape dans laquelle on fait passer lesdites eaux usées dans ledit dispositif, une demande chimique en oxygène comprise entre 5 ppm et 50 ppm, à titre préférentiel comprise entre 10 ppm et 20 ppm.

10. Procédé destiné à un traitement des eaux usées selon l'une quelconque des revendications 6 à 9, **caractérisé en ce que** ledit au moins un type de micropolluant est un xénobiotique, en particulier le diclofénac, la carbamazépine, la lidocaïne, le métropolol, l'aténolol, la sulfadimidine, leurs dérivés et/ou l'une quelconque de leurs combinaisons.

11. Procédé destiné à un traitement des eaux usées selon l'une quelconque des revendications 6 à 10, **caractérisé en ce que** la concentration desdits analogues structurels des composants compris dans lesdites eaux usées est comprise entre 0 % et 1000 % de la concentration des composants compris dans lesdites eaux usées, à titre préférentiel entre 50 % et 300 %.
